# EUROPEAN PATENT APPLICATION

(11) **EP 4 305 967 A1**
(43) Date of publication of application: **17.01.2024**
(21) Application number: 22766756.5
(22) Date of filing: 16.02.2022
(51) Int. Cl.: A23J 3/00, A23J 3/14, A23J 3/22, A23L 13/00, A23L 17/60, A23L 19/00, A23L 29/20

(54) **PROCESSED MEAT-LIKE FOOD, CONNECTIVE TISSUE-LIKE TEXTURE IMPARTING AGENT, METHOD FOR IMPROVING TEXTURE OF PROCESSED MEAT-LIKE FOOD, AND METHOD FOR MANUFACTURING PROCESSED MEAT-LIKE FOOD**

(30) Priority: 08.03.2021 JP 2021036447
(71) Applicant: Nissui Corporation, Tokyo 105-8676 (JP)
(72) Inventor: HORIUCHI Yu, Hachioji-shi, Tokyo 192-0991 (JP); KUMAZAWA Keiko, Hachioji-shi, Tokyo 192-0991 (JP); ICHIKAWA Akiko, Hachioji-shi, Tokyo 192-0991 (JP); YOKOTA Nobuhiro, Hachioji-shi, Tokyo 192-0991 (JP); SUGIYAMA Kiminori, Hachioji-shi, Tokyo 192-0991 (JP)
(74) Representative: Mewburn Ellis LLP
(86) International application number: PCT/JP2022/006109
(87) International publication number: WO 2022/190792

(57) **Abstract**

To provide a processed meat-like food having texture closer to those of processed meat foods produced from meat as a main raw material; to provide a texture imparting agent capable of imparting texture closer to those of processed meat foods produced from meat as a main raw material to a processed meat-like food; to provide a method for approximating the texture of a processed meat-like food to those of processed meat foods produced from meat as a main raw material; and to provide a production method for a processed meat-like food having texture closer to those of processed meat foods produced from meat as a main raw material. A processed meat-like food containing a connective tissue-like texture imparting agent and a textured vegetable protein; a connective tissue-like texture imparting agent; a method for texture improvement of a processed meat-like food containing a textured vegetable protein, wherein a connective tissue-like texture imparting agent is added; and a production method for a processed meat-like food, the production method including a step of mixing a connective tissue-like texture imparting agent and a textured vegetable protein.

## Description

### Technical Field

The present disclosure relates to a processed meat-like food, a connective tissue-like texture imparting agent, a method for texture improvement of a processed meat-like food, and a production method for a processed meat-like food.

### Background Art

Demand for processed meat-like foods obtained by substituting at least part of meat for processed meat foods with vegetable protein (hereinafter, occasionally referred to as "processed meat-like foods", simply) has been recently increasing because of growing health consciousness and the viewpoint of reduction of environmental loads. As compared with the textures of processed meat foods produced from meat as a main raw material, the textures of processed meat-like foods tend to lack elasticity and be excessively homogeneous.

To approximate the textures of processed meat-like foods to those of processed meat foods produced from meat as a main raw material, various methods have been examined (e.g., Patent Literatures 1 and 2). However, there is a significant difference still now between the textures of processed meat-like foods and those of processed meat foods produced from meat as a main raw material.

### Document List

### Patent Literatures

Patent Literature 1: EP 1205114 A1
Patent Literature 2: EP 3292769 A1

### Summary of Invention

### Technical Problem

Tasks of the present disclosure are to provide a processed meat-like food having texture closer to those of processed meat foods produced from meat as a main raw material, to provide a texture imparting agent capable of imparting texture closer to those of processed meat foods produced from meat as a main raw material to a processed meat-like food, to provide a method for approximating the texture of a processed meat-like food to those of processed meat foods produced from meat as a main raw material, and to provide a production method for a processed meat-like food having texture closer to those of processed meat foods produced from meat as a main raw material.

### Solution to Problem

Embodiments of the present disclosure are as follows.
[1] A processed meat-like food containing a connective tissue-like texture imparting agent and a textured vegetable protein.
[2] The processed meat-like food according to [1], wherein the connective tissue-like texture imparting agent is a dietary fiber-rich food shredded product.
[3] The processed meat-like food according to [2], wherein the dietary fiber-rich food shredded product is a shredded product of a food having a total dietary fiber content of 30% by mass or more to the total amount with moisture excluded.
[4] The processed meat-like food according to [2] or [3], wherein the dietary fiber-rich food shredded product is a shredded product of a food having an insoluble dietary fiber content of 40% by mass or more to the total amount with moisture excluded.
[5] The processed meat-like food according to any one of [2] to [4], wherein the dietary fiber-rich food shredded product contains β-glucan.
[6] The processed meat-like food according to any one of [2] to [5], wherein the dietary fiber-rich food shredded product is a shredded product of at least one selected from the group consisting of algae, mushrooms, vegetables, and fruits.
[7] The processed meat-like food according to any one of [1] to [6], wherein the connective tissue-like texture imparting agent is a food shredded product capable of passing through a sieve with an opening of 4.0 mm.
[8] The processed meat-like food according to any one of [1] to [7], wherein the brittle load of the connective tissue-like texture imparting agent is 0.1 to 5.0 N.
[9] The processed meat-like food according to any one of [1] to [8], wherein the textured vegetable protein is a granular vegetable protein and/or a fibrous vegetable protein.
[10] The processed meat-like food according to any one of [1] to [9], wherein the content of the connective tissue-like texture imparting agent to 100 parts by mass of the total amount with the connective tissue-like texture imparting agent excluded is 0.1 to 5 parts by mass.
[11] A connective tissue-like texture imparting agent.
[12] The connective tissue-like texture imparting agent according to [11], for use in combination with a textured vegetable protein.
[13] The connective tissue-like texture imparting agent according to [12], for imparting connective tissue-like texture to the textured vegetable protein.
[14] The connective tissue-like texture imparting agent according to any one of [11] to [13], being a dietary fiber-rich food shredded product.
[15] The connective tissue-like texture imparting agent according to [14], wherein the dietary fiber-rich food shredded product is a shredded product of a food having a total dietary fiber content of 30% by mass or more to the total amount with moisture excluded.
[16] The connective tissue-like texture imparting agent according to [14] or [15], wherein the dietary fiber-rich food shredded product is a shredded product of a food having an insoluble dietary fiber content of 40% by mass or more to the total amount with moisture excluded.
[17] The connective tissue-like texture imparting agent according to any one of [14] to [16], wherein the dietary fiber-rich food shredded product contains β-glucan.
[18] The connective tissue-like texture imparting agent according to any one of [14] to [17], wherein the dietary fiber-rich food shredded product is a shredded product of an alga or a mushroom.
[19] The connective tissue-like texture imparting agent according to any one of [11] to [18], being a food shredded product capable of passing through a sieve with an opening of 4.0 mm.
[20] The connective tissue-like texture imparting agent according to [19], being a food shredded product capable of passing through a sieve with an opening of 1.4 mm.
[21] The connective tissue-like texture imparting agent according to any one of [11] to [20], having a moisture content of 20% by mass or less.
[22] A method for texture improvement of a processed meat-like food containing a textured vegetable protein, wherein a connective tissue-like texture imparting agent is added.
[23] The method according to [22], wherein the connective tissue-like texture imparting agent is a dietary fiber-rich food shredded product.
[24] The method according to [23], wherein the dietary fiber-rich food shredded product is a shredded product of a food having a total dietary fiber content of 30% by mass or more to the total amount with moisture excluded.
[25] The method according to [23] or [24], wherein the dietary fiber-rich food shredded product is a shredded product of a food having an insoluble dietary fiber content of 40% by mass or more to the total amount with moisture excluded.
[26] The method according to any one of [23] to [25], wherein the dietary fiber-rich food shredded product contains β-glucan.
[27] The method according to any one of [22] to [26], wherein the connective tissue-like texture imparting agent is a food shredded product capable of passing through a sieve with an opening of 4.0 mm.
[28] The method according to [27], wherein the connective tissue-like texture imparting agent is a food shredded product capable of passing through a sieve with an opening of 1.4 mm.
[29] The method according to any one of [22] to [28], wherein the moisture content of the connective tissue-like texture imparting agent is 20% by mass or less.
[30] A production method for a processed meat-like food, the production method including a step of mixing a connective tissue-like texture imparting agent and a textured vegetable protein.
[31] The production method according to [30], wherein the connective tissue-like texture imparting agent is a dietary fiber-rich food shredded product.
[32] The production method according to [31], wherein the dietary fiber-rich food shredded product is a shredded product of a food having a total dietary fiber content of 30% by mass or more to the total amount with moisture excluded.
[33] The production method according to [31] or [32], wherein the dietary fiber-rich food shredded product is a shredded product of a food having an insoluble dietary fiber content of 40% by mass or more to the total amount with moisture excluded.
[34] The production method according to any one of [31] to [33], wherein the dietary fiber-rich food shredded product contains β-glucan.
[35] The production method according to any one of [30] to [34], wherein the connective tissue-like texture imparting agent is a food shredded product capable of passing through a sieve with an opening of 4.0 mm.
[36] The production method according to [35], wherein the connective tissue-like texture imparting agent is a food shredded product capable of passing through a sieve with an opening of 1.4 mm.
[37] The production method according to any one of [30] to [36], wherein the moisture content of the connective tissue-like texture imparting agent is 20% by mass or less.
[38] The production method according to [37], wherein the connective tissue-like texture imparting agent is allowed to absorb water in advance and then mixed with the textured vegetable protein.
[39] The production method according to [37], wherein the connective tissue-like texture imparting agent, without being allowed to absorb water in advance, is mixed with the textured vegetable protein.

### Effects of Invention

According to the present disclosure, a processed meat-like food having texture closer to those of processed meat foods produced from meat as a main raw material, a texture imparting agent capable of imparting texture closer to those of processed meat foods produced from meat as a main raw material to a processed meat-like food, a method for approximating the texture of a processed meat-like food to those of processed meat foods produced from meat as a main raw material, and a production method for a processed meat-like food having texture closer to those of processed meat foods produced from meat as a main raw material can be provided.

### Description of Embodiments

### [Processed meat-like food]

The processed meat-like food of the present disclosure contains a connective tissue-like texture imparting agent and a textured vegetable protein. Hereinafter, the processed meat-like food of the present disclosure will be described in detail.

### (Connective tissue-like texture imparting agent)

The connective tissue-like texture imparting agent is used in combination with a textured vegetable protein to impart connective tissue-like texture to the textured vegetable protein. Herein, "connective tissue-like texture" refers to texture similar to that derived from the connective tissue of meat. The present inventors have found that the reason for the difference between the textures of conventional processed meat-like foods and those of processed meat foods produced from meat as a main raw material is that the conventional processed meat-like foods have not succeeded in reproducing the fine texture that is elastic but allows easy biting-off, that is, the springy and crunchy sensation given by processed meat foods produced from meat as a main raw material. In sensory evaluation, the connective tissue-like texture can be typically recognized as having a springy and crunchy sensation, little foreign-body sensation, or meat-like chewy sensation, and a combination of any of them. In physical properties evaluation, the connective tissue-like texture can be typically recognized as having hardness, brittleness, aggregability, gumminess, chewiness, or thickness, and a combination of any of them. Evaluation may be performed for the connective tissue-like texture through a combination of sensory evaluation and physical properties evaluation. Furthermore, the present inventors have found that the connective tissue-like texture can be imparted with a combination of specific substances in production of a processed meat-like food, and eventually completed the present invention.

The connective tissue-like texture imparting agent is not particularly limited as long as the connective tissue-like texture imparting agent imparts the connective tissue-like texture to textured vegetable proteins, and, for example, a dietary fiber-rich food shredded product can be used.

As the dietary fiber-rich food shredded product, a shredded product of a food having a total dietary fiber content of 30% by mass or more, 40% by mass or more, 60% by mass or more, or 80% by mass or more to the total amount with moisture excluded can be used. The more the total dietary fiber content of the shredded product of the food for use as the dietary fiber-rich food shredded product to the total amount with moisture excluded, the more strongly the connective tissue-like texture can be imparted. An upper limit value of the total dietary fiber content of the shredded product of the food for use as the dietary fiber-rich food shredded product to the total amount with moisture excluded can be selected from 99.99% by mass, 99.9% by mass, 99.0% by mass, or 99% by mass. An upper limit value and lower limit value of the total dietary fiber content to the total amount with moisture excluded can be arbitrarily combined within the scope of the present disclosure.

As the dietary fiber-rich food shredded product, a shredded product of a food having an insoluble dietary fiber content of 1% by mass or more, 5% by mass or more, 10% by mass or more, 20% by mass or more, 40% by mass or more, or 50% by mass or more to the total amount with moisture excluded may be used. The more the insoluble dietary fiber content of the shredded product of the food for use as the dietary fiber-rich food shredded product to the total amount with moisture excluded, the more strongly the connective tissue-like texture can be imparted. An upper limit value of the insoluble dietary fiber content of the shredded product of the food for use as the dietary fiber-rich food shredded product to the total amount with moisture excluded can be selected from 99.99% by mass, 99.9% by mass, 99.0% by mass, or 99% by mass. An upper limit value and lower limit value of the insoluble dietary fiber content to the total amount with moisture excluded can be arbitrarily combined within the scope of the present disclosure.

Total dietary fiber content to the total amount with moisture excluded as calculated from a numerical value listed in STANDARD TABLES OF FOOD COMPOSITION IN JAPAN - 2015 - (Seventh Revised Edition) by the Subdivision on Resources, the Council for Science and Technology, Ministry of Education, Culture, Sports, Science and Technology, Japan is approximately 33.8% by mass for wakame (Undaria pinnatifida) stems, approximately 45.4% by mass for shiitake (Lentinula edodes), approximately 45.1% by mass for maitake (Grifola frondosa), approximately 80.4% by mass for snow fungus, approximately 67.5% by mass for wood ear mushroom, and approximately 91.5% by mass for cloud ear fungus. Insoluble dietary fiber content to the total amount with moisture excluded is, for example, approximately 42.1% by mass for shiitake, approximately 43.4% by mass for maitake, approximately 57.8% by mass for snow fungus, approximately 67.5% by mass for wood ear mushroom, and approximately 84.1% by mass for cloud ear fungus. Furthermore, watersoluble dietary fiber content to the total amount with moisture excluded is, for example, approximately 3.3% by mass for shiitake, approximately 1.7% by mass for maitake, approximately 22.6% by mass for snow fungus, approximately 0% by mass for wood ear mushroom, and approximately 7.2% by mass for cloud ear fungus.

The dietary fiber-rich food shredded product can contain β-glucan. The content of β-glucan in the dietary fiber-rich food shredded product can be 10% by mass or more, 20% by mass or more, 30% by mass or more, or 40% by mass or more. The content of β-glucan in the dietary fiber-rich food shredded product can be 99% by mass or less, 90% by mass or less, 80% by mass or less, or 70% by mass or less. An upper limit value and lower limit value of the content of β-glucan in the dietary fiber-rich food shredded product can be arbitrarily combined within the scope of the present disclosure.

Examples of β-glucan include β-1,3-1,6-glucan, 0-1,3-1,4-glucan, and β-1,4-glucan. β-1,3-1,6-Glucan is an insoluble dietary fiber, and can impart connective tissue-like texture without dissolving in water. The content of β-1,3-1,6-glucan to the total amount of β-glucan contained in the dietary fiber-rich food shredded product can be 10% by mass or more, 20% by mass or more, 30% by mass or more, or 40% by mass or more. The content of β-1,3-1,6-glucan to the total amount of β-glucan contained in the dietary fiber-rich food shredded product can be 99% by mass or less, 90% by mass or less, 80% by mass or less, or 70% by mass or less. An upper limit value and lower limit value of the content of β-1,3-1,6-glucan to the total amount of β-glucan contained in the dietary fiber-rich food shredded product can be arbitrarily combined within the scope of the present disclosure.

As the dietary fiber-rich food shredded product, a shredded product of any selected from the group consisting of algae, mushrooms, vegetables, and fruits may be used. Algae or mushrooms are advantageous in forming a shredded product.

As the dietary fiber-rich food shredded product, one dietary fiber-rich food shredded product may be used alone, and two or more dietary fiber-rich food shredded products may be used in combination.

Seaweed can be used as an alga. A shredded product of seaweed can be made rich in components derived from seawater. Any alga selected from the group consisting of red algae, brown algae, and green algae can be used. Brown algae often grow and increase in size, and allow easy inclusion of much dietary fiber. Wakame stems can be used as a brown alga. Wakame stems have a high dietary fiber content, and allow easy inclusion of much dietary fiber.

One alga of the algae may be used alone, and two or more algae thereof may be used in combination.

Mushrooms belonging to the phylum Ascomycota or the phylum Basidiomycota can be used as mushrooms. Mushrooms belonging to an order selected from the group consisting of the order Auriculariales, the order Tremellales, the order Agaricales, the order Polyporales, the order Dacrymycetales, the order Aphyllophorales, the order Hymenochaetales, the order Sclerodermatales, order Tulostomatales, the order Melanogastrales, the order Nidulariales, the order Lycoperdales, the order Phallales, and the order Hymenogastrales can be used as mushrooms belonging to the phylum Basidiomycota. Mushrooms belonging to an order selected from the group consisting of the order Auriculariales, the order Tremellales, the order Agaricales, and the order Polyporales include many edible species and are easy to use.

Among the aforementioned mushrooms, mushrooms belonging to a family selected from the group consisting of the family Auricularaceae, the family Tremellaceae, the family Tricholomataceae, and the family Meripilaceae can be used. Among the aforementioned mushrooms, mushrooms belonging to a genus selected from the group consisting of the genus Auricularia, the genus Tremella, the genus Lentinula, and the genus Grifola can be used. Mushrooms belonging to the genus Auricularia or the genus Tremella contain dietary fiber having unique texture and can readily impart connective tissue-like texture.

One of the mushrooms may be used alone, and two or more thereof may be used in combination.

As the connective tissue-like texture imparting agent, a food shredded product capable of passing through a sieve with an opening of 4.0 mm, a food shredded product capable of passing through a sieve with an opening of 2.36 mm, or a food shredded product capable of passing through a sieve with an opening of 1.4 mm can be used. Of food shredded products capable of passing through a sieve with an opening of 4.0 mm to 1.4 mm, typically, finer ones cause less foreign-body sensation, and can readily impart connective tissue-like texture.

As the connective tissue-like texture imparting agent, a food shredded product incapable of passing through a sieve with an opening of 0.5 mm can be used. Typically, food shredded products incapable of passing through a sieve with an opening of 0.5 mm can readily impart connective tissue-like texture with springy and crunchy sensation.

Any combination of sieves within the scope of the present disclosure can be used to determine the size of the connective tissue-like texture imparting agent. With the proper size of the connective tissue-like texture imparting agent, appropriate connective tissue-like texture can be imparted to a processed meat-like food with the foreign-body sensation in eating the processed meat-like food reduced.

The connective tissue-like texture imparting agent can have a moisture content of 30% by mass or less, 25% by mass or less, 20% by mass or less, or 15% by mass or less. The moisture content of the connective tissue-like texture imparting agent in the proper range allows odor and flavor derived from the textured vegetable protein to be masked, and allows odor and flavor derived from the connective tissue-like texture imparting agent to be prevented from being imparted. A lower limit value of the moisture content of the connective tissue-like texture imparting agent can be selected from 0.01% by mass, 0.1% by mass, or 1% by mass. An upper limit value and lower limit value of the moisture content of the connective tissue-like texture imparting agent can be arbitrarily combined within the scope of the present disclosure.

The brittle load of the connective tissue-like texture imparting agent can be 0.05 N or higher, 0.1 N or higher, 0.2 N or higher, or 0.3 N or higher. The brittle load of the connective tissue-like texture imparting agent can be 6.0 N or lower, 5.0 N or lower, or 4.0 N or lower. An upper limit value and lower limit value of the brittle load can be arbitrarily combined. The brittle load can be measured, for example, by using a method described later in Examples.

As the connective tissue-like texture imparting agent, one connective tissue-like texture imparting agent may be used alone, and two or more connective tissue-like texture imparting agents may be used in combination.

### (Textured vegetable protein)

It is preferable that a granular vegetable protein or a fibrous vegetable protein be used as the textured vegetable protein. Herein, definitions in accordance with Japanese Agricultural Standards by Ministry of Agriculture, Forestry and Fisheries are used for the terms "granular vegetable protein" and "fibrous vegetable protein". Specifically, "granular vegetable proteins" herein refer to vegetable proteins formed into granules or flakes and having meat-like structure. "Fibrous vegetable proteins" herein refer to vegetable proteins formed into fibers and having meat-like structure.

As the textured vegetable protein, a textured vegetable protein derived from soy, peas, wheat gluten, or a combination of any of them can be used. Textured vegetable proteins derived from soy, peas, wheat gluten, or a combination of any of them have been demonstrated to be safe and are easy to use. Typically, textured vegetable proteins derived from soy have an advantage of easiness in forming structure.

As the textured vegetable protein, one textured vegetable protein may be used alone, and two or more textured vegetable proteins may be used in combination.

### (Content of connective tissue-like texture imparting agent)

The content of the connective tissue-like texture imparting agent in the processed meat-like food of the present disclosure to 100 parts by mass of the total amount with the connective tissue-like texture imparting agent excluded can be 0.1 parts by mass or more, 0.15 parts by mass or more, or 0.2 parts by mass or more. Typically, the more the content of the connective tissue-like texture imparting agent, the more readily connective tissue-like texture can be imparted.

The content of the connective tissue-like texture imparting agent in the processed meat-like food of the present disclosure to 100 parts by mass of the total amount with the connective tissue-like texture imparting agent excluded can be 5 parts by mass or less, 4 parts by mass or less, 3 parts by mass or less, or 2 parts by mass or less. Typically, the less the content of the connective tissue-like texture imparting agent, the more reliably foreign-body sensation can be reduced.

An upper limit value and lower limit value of the content of the connective tissue-like texture imparting agent can be arbitrarily combined within the scope of the present disclosure. With the content of the connective tissue-like texture imparting agent being within the proper range, appropriate connective tissue-like texture can be imparted to a processed meat-like food with the foreign-body sensation in eating the processed meat-like food reduced.

The content of the connective tissue-like texture imparting agent in the processed meat-like food of the present disclosure can be 0.5 parts by mass or more or 1 part by mass or more to 100 parts by mass of the textured vegetable protein. The more the content of the connective tissue-like texture imparting agent to that of the textured vegetable protein, the more readily connective tissue-like texture can be imparted.

The content of the connective tissue-like texture imparting agent in the processed meat-like food of the present disclosure can be 30 parts by mass or less, 20 parts by mass or less, 15 parts by mass or less, or 12 parts by mass or less to 100 parts by mass of the textured vegetable protein. The less the content of the connective tissue-like texture imparting agent to that of the textured vegetable protein, the more reliably foreign-body sensation can be reduced.

An upper limit value and lower limit value of the content of the connective tissue-like texture imparting agent to that of the textured vegetable protein can be arbitrarily combined within the scope of the present disclosure. Typically, with the content of the connective tissue-like texture imparting agent to that of the textured vegetable protein being within the proper range, appropriate connective tissue-like texture can be imparted to a processed meat-like food with the foreign-body sensation in eating the processed meat-like food reduced.

The content of the connective tissue-like texture imparting agent may be set according to texture of interest. Setting can be performed in such a manner that, for example, the content of the connective tissue-like texture imparting agent is increased in substituting processed meat foods containing beef or chicken, and the content of the connective tissue-like texture imparting agent is decreased in substituting processed meat foods containing pork.

### (Additional component)

The processed meat-like food of the present disclosure may further contain an additional component in addition to the connective tissue-like texture imparting agent and the textured vegetable protein, unless the advantageous effects of the present disclosure are inhibited.

The processed meat-like food of the present disclosure may contain, as the additional component, for example, at least one selected from the group consisting of water, fruit juice, vegetables, starch, fat and oil, seasonings, spices, thickeners, pigments, flavors, and enzymes. For example, defatted soy flour, wheat gluten, or the like may be used as a binder. The processed meat-like food of the present disclosure may further contain a non-textured vegetable protein.

In some cases, the connective tissue-like texture imparting agent may act as a binder. If the connective tissue-like texture imparting agent acts as a binder, inclusion of the connective tissue-like texture imparting agent in the processed meat-like food of the present disclosure typically allows the processed meat-like food to be formed with ease and to be prevented from deforming in baking. The connective tissue-like texture imparting agent also allows reduction in the amount of usage of a conventional binder such as defatted soy flour and wheat gluten, and hence the discomfortable sensation of texture imparted by such a conventional binder can be typically minimized.

The processed meat-like food of the present disclosure may further contain meat depending on the application. That is, the processed meat-like food of the present disclosure may be a processed meat-like food obtained by substituting meat in a processed meat food not totally but only partially with a vegetable protein. The processed meat-like food of the present disclosure may contain, for example, at least one selected from the group consisting of beef, pork, horsemeat, mutton, chevon, and chicken as meat.

The processed meat-like food of the present disclosure can be used as an alternative to any processed meat food containing meat (examples thereof include hamburger steak, meatballs, Chinese dumplings, meatloaf, and tsukune (Japanese grilled chicken meatballs)). Especially, the processed meat-like food of the present disclosure can be preferably used as an alternative to processed meat foods containing beef or chicken, which significantly gives texture derived from connective tissue.

### [Method for texture improvement of processed meat-like food]

In a method of the present disclosure for texture improvement of a processed meat-like food, a connective tissue-like texture imparting agent is added to a processed meat-like food containing a textured vegetable protein.

As the connective tissue-like texture imparting agent, the same one as described above as a connective tissue-like texture imparting agent that the processed meat-like food of the present disclosure contains can be used.

As the textured vegetable protein, the same one as described above as a textured vegetable protein that the processed meat-like food of the present disclosure contains can be used.

In the method of the present disclosure for texture improvement of a processed meat-like food, 0.1 parts by mass or more, 0.15 parts by mass or more, or 0.2 parts by mass or more of the connective tissue-like texture imparting agent can be added to 100 parts by mass of the processed meat-like food. Typically, the more the connective tissue-like texture imparting agent is added, the more readily connective tissue-like texture can be imparted.

In the method of the present disclosure for texture improvement of a processed meat-like food, 5 parts by mass or less, 4 parts by mass or less, 3 parts by mass or less, or 2 parts by mass or less of the connective tissue-like texture imparting agent can be added to 100 parts by mass of the processed meat-like food. Typically, the less the loading of the connective tissue-like texture imparting agent, the more reliably foreign-body sensation can be reduced.

An upper limit value and lower limit value of the loading of the connective tissue-like texture imparting agent can be arbitrarily combined within the scope of the present disclosure. With the loading of the connective tissue-like texture imparting agent being within the proper range, appropriate connective tissue-like texture can be imparted to a processed meat-like food with the foreign-body sensation in eating the processed meat-like food reduced.

In the method of the present disclosure for texture improvement of a processed meat-like food, 0.5 parts by mass or more or 1 part by mass or more of the connective tissue-like texture imparting agent can be added to 100 parts by mass of the textured vegetable protein. Typically, the more the loading of the connective tissue-like texture imparting agent to the textured vegetable protein, the more readily connective tissue-like texture can be imparted.

In the method of the present disclosure for texture improvement of a processed meat-like food, 30 parts by mass or less, 20 parts by mass or less, 15 parts by mass or less, or 12 parts by mass or less of the connective tissue-like texture imparting agent can be added to 100 parts by mass of the textured vegetable protein.

An upper limit value and lower limit value of the loading of the connective tissue-like texture imparting agent to the textured vegetable protein can be arbitrarily combined within the scope of the present disclosure. Typically, with the loading of the connective tissue-like texture imparting agent to the textured vegetable protein being within the proper range, appropriate connective tissue-like texture can be imparted to a processed meat-like food with the foreign-body sensation in eating the processed meat-like food reduced.

The loading of the connective tissue-like texture imparting agent may be set according to texture of interest. Setting can be performed in such a manner that, for example, the loading of the connective tissue-like texture imparting agent is increased in substituting processed meat foods containing beef or chicken, and the loading of the connective tissue-like texture imparting agent is decreased in substituting processed meat foods containing pork.

In the method of the present disclosure for texture improvement of a processed meat-like food, an additional component may be further added in addition to the connective tissue-like texture imparting agent, unless the advantageous effects of the present disclosure are inhibited.

As the additional component, the same one as described above as an additional component that the processed meat-like food of the present disclosure contains can be used.

### [Production method for processed meat-like food]

A production method of the present disclosure for a processed meat-like food includes a step of mixing a connective tissue-like texture imparting agent and a textured vegetable protein.

As the connective tissue-like texture imparting agent, the same one as described above as a connective tissue-like texture imparting agent that the processed meat-like food of the present disclosure contains can be used.

As the textured vegetable protein, the same one as described above as a textured vegetable protein that the processed meat-like food of the present disclosure contains can be used.

In the production method of the present disclosure for a processed meat-like food, 0.1 parts by mass or more, 0.15 parts by mass or more, or 0.2 parts by mass or more of the connective tissue-like texture imparting agent can be mixed with 100 parts by mass of the processed meat-like food. Typically, connective tissue-like texture can be more readily imparted by mixing a larger amount of the connective tissue-like texture imparting agent.

In the production method of the present disclosure for a processed meat-like food, 5 parts by mass or less, 4 parts by mass or less, 3 parts by mass or less, or 2 parts by mass or less of the connective tissue-like texture imparting agent can be mixed with 100 parts by mass of the processed meat-like food. Typically, foreign-body sensation can be more reliably reduced by mixing a smaller amount of the connective tissue-like texture imparting agent.

An upper limit value and lower limit value of the amount of the connective tissue-like texture imparting agent to be mixed with the processed meat-like food in the production method for the processed meat-like food can be arbitrarily combined within the scope of the present disclosure. With the amount of the connective tissue-like texture imparting agent mixed with the processed meat-like food being within the proper range, appropriate connective tissue-like texture can be imparted to a processed meat-like food with the foreign-body sensation in eating the processed meat-like food reduced.

In the production method of the present disclosure for a processed meat-like food, 0.5 parts by mass or more or 1 part by mass or more of the connective tissue-like texture imparting agent can be mixed with 100 parts by mass of the textured vegetable protein. Typically, the more the amount of the connective tissue-like texture imparting agent mixed with the textured vegetable protein, the more readily connective tissue-like texture can be imparted.

In the production method of the present disclosure for a processed meat-like food, 30 parts by mass or less, 20 parts by mass or less, 15 parts by mass or less, or 12 parts by mass or less of the connective tissue-like texture imparting agent can be mixed with 100 parts by mass of the textured vegetable protein. Typically, the less the amount of the connective tissue-like texture imparting agent mixed with the textured vegetable protein, the more reliably foreign-body sensation can be reduced.

An upper limit value and lower limit value of the amount of the connective tissue-like texture imparting agent to be mixed with the textured vegetable protein in the production method for a processed meat-like food can be arbitrarily combined within the scope of the present disclosure. With the amount of the connective tissue-like texture imparting agent mixed with the textured vegetable protein being within the proper range, appropriate connective tissue-like texture can be imparted to a processed meat-like food with the foreign-body sensation in eating the processed meat-like food reduced.

The amount of the connective tissue-like texture imparting agent to be mixed may be set according to texture of interest. Setting can be performed in such a manner that, for example, the amount of the connective tissue-like texture imparting agent to be mixed is increased in substituting processed meat foods containing beef or chicken, and the amount of the connective tissue-like texture imparting agent to be mixed is decreased in substituting processed meat foods containing pork.

In the production method of the present disclosure for a processed meat-like food, the connective tissue-like texture imparting agent and the textured vegetable protein, and an additional component, as necessary, may be simultaneously mixed, or the connective tissue-like texture imparting agent may be additionally mixed after mixing the textured vegetable protein and an additional component, as necessary.

As the additional component, the same one as described above as an additional component that the processed meat-like food of the present disclosure contains can be used.

Mixing may be performed by hand, or mechanically by using a kneader, a silent cutter, or the like.

In mixing the connective tissue-like texture imparting agent and the textured vegetable protein, the connective tissue-like texture imparting agent may be allowed to absorb water in advance and then mixed with the textured vegetable protein. On the other hands, the connective tissue-like texture imparting agent may be mixed with the textured vegetable protein without allowing the connective tissue-like texture imparting agent to absorb water in advance.

If the connective tissue-like texture imparting agent is mixed with the textured vegetable protein without allowing the connective tissue-like texture imparting agent to absorb water in advance in mixing the connective tissue-like texture imparting agent and the textured vegetable protein, odor and flavor derived from the textured vegetable protein can be readily masked and/or an effect of preventing odor and flavor derived from the connective tissue-like texture imparting agent from being imparted can be readily obtained.

After being mixed with the textured vegetable protein and an additional component, the connective tissue-like texture imparting agent absorbs moisture, and may swell and increase in size. In particular, if the textured vegetable protein and an additional component are mixed without allowing the connective tissue-like texture imparting agent to absorb water in advance, the size change from before to after the mixing is larger. As described later in Examples, examination by the present inventors has revealed that if the connective tissue-like texture imparting agent is a food shredded product capable of passing through a sieve with an opening of 1.4 mm, the connective tissue-like texture imparting agent absorbs moisture in the processed meat-like food, and remains primarily in a size that allows the connective tissue-like texture imparting agent to pass through a sieve with an opening of 4.0 mm even after swelling. That is, it is preferable to use a food shredded product capable of passing through a sieve with an opening of 1.4 mm as the connective tissue-like texture imparting agent for a processed meat-like food. Thereby, an effect of imparting appropriate connective tissue-like texture to a processed meat-like food with the foreign-body sensation in eating the processed meat-like food reduced can be readily obtained.

Herein, specific matters described for an embodiment relating to an aspect of the present disclosure may be arbitrarily combined to form a new embodiment, and it should be understood that such new embodiments can be included in the aspect of the present disclosure.

### Examples

Hereinafter, the present disclosure will be more specifically described with reference to Examples and others, but the present disclosure is never limited to those Examples and others.

### [Preparation of connective tissue-like texture imparting agents]

Samples (dried snow fungus, raw snow fungus, raw cloud ear fungus, dried shiitake, dried maitake, and dried wakame stems) were each shredded with a food processor (MK-K61 manufactured by Panasonic Corporation, blade shape: knife cutter) under a condition of 2200 rotations/min. The dried snow fungus was one that had been imported by DAIYOU BUSSAN CO., LTD. from Fujian Province, China, and was purchased from GS Select Foods. The raw snow fungus and raw cloud ear fungus were ones purchased from Foods Net Fukushima K. K. The dried shiitake was one purchased from Creation Box K. K. The dried maitake was one purchased from Nakayama Shokutake. The dried wakame stems were ones purchased from YAMASHIROYA. The shredded products obtained were each sieved through five sieves of metal wire cloth in accordance with the specification JIS Z 8801-1:2000 with openings of 0.5 mm, 1.4 mm, 2.36 mm, 4.0 mm, and 5.6 mm into fraction 1 (a fraction that passed through the sieve with an opening of 0.5 mm), fraction 2 (a fraction incapable of passing through the sieve with an opening of 0.5 mm and capable of passing through the sieve with an opening of 1.4 mm), fraction 3 (a fraction incapable of passing through the sieve with an opening of 1.4 mm and capable of passing through the sieve with an opening of 2.36 mm), fraction 4 (a fraction incapable of passing through the sieve with an opening of 2.36 mm and capable of passing through the sieve with an opening of 4.0 mm), and fraction 5 (a fraction incapable of passing through the sieve with an opening of 4.0 mm and capable of passing through the sieve with an opening of 5.6 mm).

Specifically, sieving was performed with the following procedure of (1) to (4). The following operations were all performed at 20 to 25°C.
(1) Each sample was shredded with the food processor for 1 minute.
(2) The five sieves were combined by stacking in descending order of the size of opening from the top and a receiver was set beneath the bottom sieve, and the top sieve was then charged with approximately 100 g of the raw material shredded in (1) and covered with a lid.
(3) The stacked sieves were shaken in one direction in the horizontal plane for 1 minute under conditions of an amplitude of approximately 70 mm and a frequency of approximately 60 cycles per minute.
(4) After shaking, samples remaining on each sieve and the receiver were collected to give shredded products of the samples sieved into the aforementioned fractions.

### [Preparation of processed meat-like foods]

Of the formulation shown in Table 1, sugar and salt were dissolved in water of Addition of water 1, and textured vegetable proteins A and B were then added thereto and mixed by hand at 10 to 15°C for 30 seconds until the mixture became homogeneous. Thereafter, defatted soy flour, wheat gluten, rapeseed oil, and water of Addition of water 2 were added thereto, and mixed by hand at 10 to 15°C for 1 minute until the mixture became homogeneous, giving mixture a. Textured vegetable proteins A and B were each a soy-derived textured vegetable protein, and textured vegetable protein A was fibrous, and textured vegetable protein B was granular.

**[Table 1]**

| Raw material | | % by mass |
|---|---|---|
| Vegetable protein A | APEX 950 (manufactured by FUJI OIL CO., LTD.) | 7.18 |
| Vegetable protein B | NEW FUJINIK 58 (manufactured by FUJI OIL CO., LTD.) | 11.18 |
| Salt | | 0.85 |
| Sugar | | 0.27 |
| Addition of water 1 | | 53.95 |
| Defatted soy flour | Fitness S (manufactured by NIPPON SHINYAKU CO., LTD.) | 3.08 |
| Wheat gluten | Fineglu EX (manufactured by Ezaki Glico Co., Ltd.) | 7.18 |
| Rapeseed oil | | 6.05 |
| Addition of water 2 | | 10.26 |
| Total | | 100.00 |

### (Examples 1 to 16)

As shown in Table 2 and Table 3, 0.25 to 2.0 parts by mass of each fraction of the dried snow fungus was added to 100 parts by mass of mixture a and mixed by hand at 10 to 15°C for 30 seconds until the mixture became homogeneous, and the resultant was divided into 20-g portions, each of which were formed into a uniform shape like hamburger steak by stamping out with a circular metal mold having a height of 20 mm and a diameter of 50 mm, giving patties of processed meat-like foods of Examples 1 to 16.

### (Examples 17 to 21)

Patties of processed meat-like foods of Examples 17 to 21 were obtained by the same method as in Examples 1 to 16, except that, as shown in Table 4, 0.5 parts by mass of fraction 2 of each sample was added to 100 parts by mass of mixture a.

### (Comparative Example 1)

A patty of a processed meat-like food of Comparative Example 1 was obtained by the same method as in Examples 1 to 16, except that none of the shredded products of the samples was added.

### (Comparative Example 2)

A patty of a processed meat-like food of Comparative Example 2 was obtained by the same method as in Examples 1 to 16, except that, in place of a shredded product of a sample, 0.5 parts by mass of wood ear mushroom extract (Tremel gum manufactured by UNITEC FOODS CO., LTD.) was added to 100 parts by mass of mixture a.

The patties of processed meat-like foods obtained as described above were baked in an oven at 250°C for 6 minutes to prepare processed meat-like foods.

### [Method and criteria for sensory evaluation]

In sensory evaluation, five trained special panelists evaluated foreign-body sensation, connective tissue-like texture, and chewy sensation with 1-point increments on the basis of the following evaluation criteria.

### (Foreign-body sensation)

Evaluation criteria for the intensity of foreign-body sensation derived from a connective tissue-like texture imparting agent and sensed in chewing were standardized by using the shredded product of the dried snow fungus. Specifically, the foreign-body sensation of each processed meat-like food was evaluated under common understanding that 4 points are given to the processed meat-like food with addition of 2 parts by mass of fraction 5 to 100 parts by mass of mixture a, wherein this processed meat-like food was rated as "discomfortable as a processed meat-like food because of excessively strong foreign-body sensation" by all the panelists, 2 points are given to the processed meat-like food with addition of 0.5 parts by mass of fraction 5 to 100 parts by mass of mixture a, 0 points are given to the processed meat-like food of Comparative Example 1, 3 points are given to cases corresponding to the middle of the criterion for 4 points and that for 2 points, and 1 point is given to cases corresponding to the middle of the criterion for 2 points and that for 0 points.

### (Springy and crunchy sensation)

Evaluation criteria for the intensity of springy and crunchy sensation sensed in chewing were standardized. Specifically, the springy and crunchy sensation of each processed meat-like food was evaluated under common understanding that 4 points are given to a processed meat food (hamburger steak) produced from minced meat (beef 100%), 2 points are given to a processed meat food produced by mixing minced meat (beef 100%) and mixture a at a mass ratio of 1:1, 0 points are given to the processed meat-like food of Comparative Example 1, 3 points are given to cases corresponding to the middle of the criterion for 4 points and that for 2 points, and 1 point is given to cases corresponding to the middle of the criterion for 2 points and that for 0 points.

### (Chewy sensation)

Evaluation criteria for the chewy sensation of the processed meat-like foods, which consists of elastic sensation and disintegrating sensation in chewing, were standardized. Specifically, the chewy sensation of each processed meat-like food was evaluated under common understanding that 4 points are given to a processed meat food (hamburger steak) produced from minced meat (beef 100%), 2 points are given to a processed meat food produced by mixing minced meat (beef 100%) and mixture a at a mass ratio of 1:1, 0 points are given to the processed meat-like food of Comparative Example 1, 3 points are given to cases corresponding to the middle of the criterion for 4 points and that for 2 points, and 1 point is given to cases corresponding to the middle of the criterion for 2 points and that for 0 points.

### [Results of sensory evaluation]

### (Influence of size and loading of connective tissue-like texture imparting agent)

Table 2 and Table 3 show results of the sensory evaluation. All the processed meat-like foods of Examples 1 to 16 were rated as being better in springy and crunchy sensation and chewy sensation than the processed meat-like food of Comparative Example 1. In particular, the processed meat-like foods of Examples 2 to 10 achieved appropriate springy and crunchy sensation with reduced foreign-body sensation, giving connective tissue-like texture closer to those of processed meat foods with meat.

**[Table 2]**

| Panelist | Evaluation item | Comparative Example 1 | Example 1 | Example 2 | Example 3 | Example 4 | Example 5 | Example 6 | Example 7 | Example 8 |
|---|---|---|---|---|---|---|---|---|---|---|
| | | Without addition | Fraction 1 (part by mass) | | | | Fraction 2 (part by mass) | | | |
| | | | 0.25 | 0.5 | 1.0 | 2.0 | 0.25 | 0.5 | 1.0 | 2.0 |
| A | Foreign-body sensation | 0 | 1 | 1 | 1 | 2 | 1 | 1 | 2 | 3 |
| | Springy and crunchy sensation | 0 | 0 | 1 | 2 | 2 | 1 | 2 | 2 | 2 |
| | Chewy sensation | 0 | 1 | 1 | 2 | 1 | 2 | 2 | 1 | 0 |
| B | Foreign-body sensation | 0 | 1 | 1 | 1 | 1 | 1 | 1 | 2 | 2 |
| | Springy and crunchy sensation | 0 | 0 | 1 | 1 | 1 | 1 | 1 | 2 | 1 |
| | Chewy sensation | 0 | 0 | 1 | 1 | 2 | 2 | 2 | 0 | 0 |
| C | Foreign-body sensation | 0 | 0 | 0 | 0 | 1 | 0 | 1 | 2 | 1 |
| | Springy and crunchy sensation | 0 | 0 | 1 | 1 | 1 | 2 | 3 | 3 | 2 |
| | Chewy sensation | 0 | 1 | 2 | 2 | 2 | 3 | 3 | 1 | 2 |
| D | Foreign-body sensation | 0 | 0 | 0 | 0 | 1 | 1 | 1 | 1 | 2 |
| | Springy and crunchy sensation | 0 | 0 | 0 | 0 | 1 | 2 | 2 | 2 | 2 |
| | Chewy sensation | 0 | 0 | 0 | 0 | 0 | 2 | 3 | 1 | 1 |
| E | Foreign-body sensation | 0 | 0 | 0 | 0 | 1 | 0 | 0 | 1 | 1 |
| | Springy and crunchy sensation | 0 | 0 | 1 | 1 | 2 | 1 | 2 | 2 | 2 |
| | Chewy sensation | 0 | 0 | 1 | 2 | 2 | 2 | 2 | 1 | 1 |
| Mean point | Foreign-body sensation | 0 | 0.4 | 0.4 | 0.4 | 1.2 | 0.6 | 0.8 | 1.6 | 1.8 |
| | Springy and crunchy sensation | 0 | 0 | 0.8 | 1 | 1.4 | 1.4 | 2 | 2.2 | 1.8 |
| | Chewy sensation | 0 | 0.4 | 1 | 1.4 | 1.4 | 2.2 | 2.4 | 0.8 | 0.8 |

**[Table 3]**

| Panelist | Evaluation item | Example 9 | Example 10 | Example 11 | Example 12 | Example 13 | Example 14 | Example 15 | Example 16 |
|---|---|---|---|---|---|---|---|---|---|
| | | Fraction 3 (part by mass) | | | | Fraction 4 (part by mass) | | | |
| | | 0.25 | 0.5 | 1.0 | 2.0 | 0.25 | 0.5 | 1.0 | 2.0 |
| A | Foreign-body sensation | 1 | 3 | 3 | 3 | 2 | 2 | 3 | 3 |
| | Springy and crunchy sensation | 2 | 3 | 3 | 3 | 1 | 1 | 2 | 3 |
| | Chewy sensation | 2 | 0 | 0 | 0 | 1 | 0 | 0 | 0 |
| B | Foreign-body sensation | 2 | 2 | 3 | 3 | 2 | 2 | 3 | 3 |
| | Springy and crunchy sensation | 2 | 2 | 1 | 1 | 2 | 2 | 1 | 1 |
| | Chewy sensation | 2 | 1 | 0 | 0 | 0 | 0 | 0 | 0 |
| C | Foreign-body sensation | 1 | 2 | 2 | 2 | 3 | 3 | 3 | 3 |
| | Springy and crunchy sensation | 2 | 1 | 1 | 1 | 1 | 0 | 0 | 1 |
| | Chewy sensation | 1 | 0 | 0 | 1 | 0 | 0 | 0 | 0 |
| D | Foreign-body sensation | 1 | 2 | 3 | 3 | 3 | 3 | 3 | 3 |
| | Springy and crunchy sensation | 2 | 3 | 3 | 3 | 3 | 4 | 4 | 4 |
| | Chewy sensation | 1 | 1 | 0 | 0 | 0 | 0 | 0 | 0 |
| E | Foreign-body sensation | 0 | 1 | 1 | 1 | 0 | 0 | 3 | 3 |
| | Springy and crunchy sensation | 2 | 3 | 2 | 2 | 2 | 2 | 2 | 3 |
| | Chewy sensation | 2 | 1 | 1 | 2 | 0 | 0 | 1 | 1 |
| Mean point | Foreign-body sensation | 1 | 2 | 2.4 | 2.4 | 2 | 2 | 3 | 3 |
| | Springy and crunchy sensation | 2 | 2.4 | 2 | 2 | 1.8 | 1.8 | 1.8 | 2.4 |
| | Chewy sensation | 1.6 | 0.6 | 0.2 | 0.6 | 0.2 | 0 | 0.2 | 0.2 |

### (Influence of type of connective tissue-like texture imparting agent)

Table 4 shows results of the sensory evaluation. As compared with the processed meat-like food of Comparative Example 1, the processed meat-like foods of Examples 6 and 17 to 21 gave foreign-body sensation to some extent, but achieved springy and crunchy sensation, and rated as being good in chewy sensation. In particular, the processed meat-like foods of Examples 6, 17 to 19, and 21 achieved appropriate springy and crunchy sensation with reduced foreign-body sensation, giving connective tissue-like texture closer to those of processed meat foods with meat.

Generally speaking, a shredded product of a mushroom or an alga added to a processed meat-like food may impart unpreferable, distinct odor and flavor derived from the shredded product to the processed meat-like food, depending on the type of the material added. However, all the panelists detected no unpreferable odor and taste from the processed meat-like foods of Examples 6 and 17 to 21.

**Table 4**

| Panelist | Item | Comparative Example 1 | Comparative Example 2 | Example 6 | Example 17 | Example 18 | Example 19 | Example 20 | Example 21 |
|---|---|---|---|---|---|---|---|---|---|
| | | Without addition | Wood ear mushroom extract | Dried snow fungus | Raw snow fungus | Raw cloud ear fungus | Dried shiitake | Dried maitake | Dried wakame stems |
| A | Foreign-body sensation | 0 | 0 | 1 | 1 | 1 | 1 | 1 | 1 |
| | Springy and crunchy sensation | 0 | 0 | 2 | 1 | 1 | 1 | 1 | 1 |
| | Chewy sensation | 0 | 1 | 2 | 1 | 1 | 1 | 1 | 1 |
| B | Foreign-body sensation | 0 | 0 | 1 | 1 | 1 | 1 | 1 | 0 |
| | Springy and crunchy sensation | 0 | 0 | 2 | 3 | 3 | 2 | 1 | 1 |
| | Chewy sensation | 0 | 0 | 2 | 2 | 3 | 0 | 0 | 0 |
| C | Foreign-body sensation | 0 | 0 | 1 | 1 | 2 | 0 | 1 | 1 |
| | Springy and crunchy sensation | 0 | 0 | 3 | 2 | 2 | 1 | 1 | 1 |
| | Chewy sensation | 0 | 1 | 3 | 2 | 0 | 1 | 0 | 1 |
| D | Foreign-body sensation | 0 | 0 | 1 | 1 | 1 | 1 | 1 | 1 |
| | Springy and crunchy sensation | 0 | 0 | 2 | 2 | 1 | 1 | 1 | 1 |
| | Chewy sensation | 0 | 0 | 3 | 2 | 1 | 0 | 0 | 1 |
| E | Foreign-body sensation | 0 | 0 | 0 | 0 | 0 | 1 | 1 | 0 |
| | Springy and crunchy sensation | 0 | 0 | 2 | 2 | 1 | 0 | 0 | 1 |
| | Chewy sensation | 0 | 1 | 2 | 2 | 1 | 0 | 0 | 1 |
| Mean point | Foreign-body sensation | 0 | 0 | 0.8 | 0.8 | 1 | 0.8 | 1 | 0.6 |
| | Springy and crunchy sensation | 0 | 0 | 2.2 | 2 | 1.6 | 1 | 0.8 | 1 |
| | Chewy sensation | 0 | 0.6 | 2.4 | 1.8 | 1.2 | 0.4 | 0.2 | 0.8 |

### [Examination of size change of connective tissue-like texture imparting agent from before to after absorbing water]

Fraction 2 (a fraction incapable of passing through the sieve with an opening of 0.5 mm and capable of passing through the sieve with an opening of 1.4 mm) of the dried snow fungus was allowed to absorb water by soaking in tap water at 20°C for 1 hour. The snow fungus after absorbing water was fractionated with sieves to find that 100% by mass passed through the sieve with an opening of 4.0 mm and 80% by mass or more passed through the sieve with an opening of 2.36 mm. From the result, it was revealed that although dried snow fungus absorbs moisture in a processed meat-like food and may swell, dried snow fungus capable of passing through a sieve with an opening of 1.4 mm remains primarily in a size that allows the dried snow fungus to pass through a sieve with an opening of 4.0 mm even after absorbing moisture in the processed meat-like food and swelling.

### [Physical properties evaluation for connective tissue-like texture imparting agents]

The physical properties of connective tissue-like texture imparting agents were measured by using a creep meter (RE2-3305S manufactured by YAMADEN co., ltd.) with a load cell of 200 N and a 1-mm cylindrical plunger under settings of an amplification of 1×, a storage pitch of 0.02 mm/sec, a strain rate of 100%, and a speed of 0.5 mm/sec in an environment at 25°C, and analyzed by using texture analysis software.

The dried snow fungus, dried shiitake, dried maitake, and dried wakame stems were allowed to absorb water in tap water at 20°C for 1 hour, and each cut into pieces of 0.8 to 2.0 mm in thickness, 1.5 to 2.0 mm in width, and 10.0 mm in length, which were subjected to measurement. The raw cloud ear fungus was not subjected to soaking treatment, and directly cut into pieces of 2 to 2.5 mm in thickness, 2 to 2.5 mm in width, and 10.0 mm in length, which were subjected to measurement. All the operations were performed at 20 to 25°C. Table 5 shows data of the physical properties (mean values at N = 10).

**[Table 5]**

| | Measurement result | | | |
|---|---|---|---|---|
| | Hardness (load) [N] | Brittleness (load) [N] | Aggregability | Gumminess (load) [N] |
| Dried snow fungus | 5.33 | 3.88 | 0.56 | 3.00 |
| Raw cloud ear fungus | 21.70 | 0.91 | 1.20 | 26.85 |
| Dried shiitake | 23.98 | 0.00 | 1.42 | 35.14 |
| Dried maitake | 10.49 | 0.70 | 1.09 | 11.55 |
| Wakame stems | 6.83 | 3.78 | 0.51 | 3.47 |

### [Physical properties evaluation for processed meat-like foods]

The processed meat-like foods of Comparative Example 1, Example 6, and Example 7 after baking were subjected to physical properties measurement. Measurement was performed by using a TENSIPRESSER (TTP-50BXII manufactured by TAKETOMO ELECTRIC, Inc.) at 25°C, and analysis was performed by using a TPA analysis/measurement program. In the analysis, a value calculated by multiplying time from the beginning of compressing a sample to the break thereof by the stress of the sample against compressing is considered to represent the chewiness of the sample. The measurement was performed by using a cylindrical plunger of 18 mm in diameter, and mean values (N = 4) were calculated. Table 6 shows the results.

**[Table 6]**

| | Chewiness | | Thickness | |
|---|---|---|---|---|
| | [gw·cm/cm2] | Standard deviation | [mm] | Standard deviation |
| Comparative Example 1 | 1212.00 | 140.90 | 18.18 | 0.493 |
| Example 6 | 1325.00 | 130.10 | 18.41 | 0.46 |
| Example 7 | 1616.00 | 103.20 | 18.75 | 0.485 |

The more the loading of the dried snow fungus was, the higher the numerical value indicative of chewiness was. The more the loading of the dried snow fungus was, the larger the thickness of a processed meat-like food was. It is expected that enhanced water retention was provided by the increased loading of the dried snow fungus, reducing the moisture reduction in baking, and as a result larger thickness was achieved in a processed meat-like food after baking. In addition, it is expected that the increased thickness led to increase in chewiness. Furthermore, it is expected that connective tissue-like texture was imparted to a processed meat-like food by increasing the loading of the dried snow fungus and thereby chewiness was imparted to a processed meat-like food.

### Industrial Applicability

The processed meat-like food of the present disclosure, the connective tissue-like texture imparting agent thereof, the method thereof for texture improvement of a processed meat-like food, and the production method thereof for a processed meat-like food are preferably applicable to the field of industry of foods obtained by substituting at least part of meat for processed meat foods with vegetable protein.

## Claims

1. A processed meat-like food comprising a connective tissue-like texture imparting agent and a textured vegetable protein.

2. The processed meat-like food according to claim 1, wherein the connective tissue-like texture imparting agent is a dietary fiber-rich food shredded product.

3. The processed meat-like food according to claim 2, wherein the dietary fiber-rich food shredded product is a shredded product of a food having a total dietary fiber content of 30% by mass or more to a total amount with moisture excluded.

4. The processed meat-like food according to claim 2 or 3, wherein the dietary fiber-rich food shredded product is a shredded product of a food having an insoluble dietary fiber content of 40% by mass or more to a total amount with moisture excluded.

5. The processed meat-like food according to any one of claims 2 to 4, wherein the dietary fiber-rich food shredded product contains β-glucan.

6. The processed meat-like food according to any one of claims 2 to 5, wherein the dietary fiber-rich food shredded product is a shredded product of at least one selected from the group consisting of algae, mushrooms, vegetables, and fruits.

7. The processed meat-like food according to any one of claims 1 to 6, wherein the connective tissue-like texture imparting agent is a food shredded product capable of passing through a sieve with an opening of 4.0 mm.

8. The processed meat-like food according to any one of claims 1 to 7, wherein a brittle load of the connective tissue-like texture imparting agent is 0.1 to 5.0 N.

9. The processed meat-like food according to any one of claims 1 to 8, wherein the textured vegetable protein is a granular vegetable protein and/or a fibrous vegetable protein.

10. The processed meat-like food according to any one of claims 1 to 9, wherein a content of the connective tissue-like texture imparting agent to 100 parts by mass of a total amount with the connective tissue-like texture imparting agent excluded is 0.1 to 5 parts by mass.

11. A connective tissue-like texture imparting agent.

12. The connective tissue-like texture imparting agent according to claim 11, for use in combination with a textured vegetable protein.

13. The connective tissue-like texture imparting agent according to claim 12, for imparting connective tissue-like texture to the textured vegetable protein.

14. The connective tissue-like texture imparting agent according to any one of claims 11 to 13, being a dietary fiber-rich food shredded product.

15. The connective tissue-like texture imparting agent according to claim 14, wherein the dietary fiber-rich food shredded product is a shredded product of a food having a total dietary fiber content of 30% by mass or more to a total amount with moisture excluded.

16. The connective tissue-like texture imparting agent according to claim 14 or 15, wherein the dietary fiber-rich food shredded product is a shredded product of a food having an insoluble dietary fiber content of 40% by mass or more to a total amount with moisture excluded.

17. The connective tissue-like texture imparting agent according to any one of claims 14 to 16, wherein the dietary fiber-rich food shredded product contains β-glucan.

18. The connective tissue-like texture imparting agent according to any one of claims 14 to 17, wherein the dietary fiber-rich food shredded product is a shredded product of an alga or a mushroom.

19. The connective tissue-like texture imparting agent according to any one of claims 11 to 18, being a food shredded product capable of passing through a sieve with an opening of 4.0 mm.

20. The connective tissue-like texture imparting agent according to claim 19, being a food shredded product capable of passing through a sieve with an opening of 1.4 mm.

21. The connective tissue-like texture imparting agent according to any one of claims 11 to 20, having a moisture content of 20% by mass or less.

22. A method for texture improvement of a processed meat-like food containing a textured vegetable protein, wherein a connective tissue-like texture imparting agent is added.

23. The method according to claim 22, wherein the connective tissue-like texture imparting agent is a dietary fiber-rich food shredded product.

24. The method according to claim 23, wherein the dietary fiber-rich food shredded product is a shredded product of a food having a total dietary fiber content of 30% by mass or more to a total amount with moisture excluded.

25. The method according to claim 23 or 24, wherein the dietary fiber-rich food shredded product is a shredded product of a food having an insoluble dietary fiber content of 40% by mass or more to a total amount with moisture excluded.

26. The method according to any one of claims 23 to 25, wherein the dietary fiber-rich food shredded product contains β-glucan.

27. The method according to any one of claims 22 to 26, wherein the connective tissue-like texture imparting agent is a food shredded product capable of passing through a sieve with an opening of 4.0 mm.

28. The method according to claim 27, wherein the connective tissue-like texture imparting agent is a food shredded product capable of passing through a sieve with an opening of 1.4 mm.

29. The method according to any one of claims 22 to 28, wherein a moisture content of the connective tissue-like texture imparting agent is 20% by mass or less.

30. A production method for a processed meat-like food, the production method comprising a step of mixing a connective tissue-like texture imparting agent and a textured vegetable protein.

31. The production method according to claim 30, wherein the connective tissue-like texture imparting agent is a dietary fiber-rich food shredded product.

32. The production method according to claim 31, wherein the dietary fiber-rich food shredded product is a shredded product of a food having a total dietary fiber content of 30% by mass or more to a total amount with moisture excluded.

33. The production method according to claim 31 or 32, wherein the dietary fiber-rich food shredded product is a shredded product of a food having an insoluble dietary fiber content of 40% by mass or more to a total amount with moisture excluded.

34. The production method according to any one of claims 31 to 33, wherein the dietary fiber-rich food shredded product contains β-glucan.

35. The production method according to any one of claims 30 to 34, wherein the connective tissue-like texture imparting agent is a food shredded product capable of passing through a sieve with an opening of 4.0 mm.

36. The production method according to claim 35, wherein the connective tissue-like texture imparting agent is a food shredded product capable of passing through a sieve with an opening of 1.4 mm.

37. The production method according to any one of claims 30 to 36, wherein a moisture content of the connective tissue-like texture imparting agent is 20% by mass or less.

38. The production method according to claim 37, wherein the connective tissue-like texture imparting agent is allowed to absorb water in advance and then mixed with the textured vegetable protein.

39. The production method according to claim 37, wherein the connective tissue-like texture imparting agent, without being allowed to absorb water in advance, is mixed with the textured vegetable protein.
